# EUROPÄISCHE PATENTANMELDUNG

(11) **EP 2 485 080 A1**
(43) Veröffentlichungstag der Anmeldung: **08.08.2012**
(21) Anmeldenummer: 12151721.3
(22) Anmeldetag: 19.01.2012
(51) Int. Cl.: G02C 5/22

(54) **Federscharnier für eine Brille**

(30) Priorität: 07.02.2011 AT 1622011
(71) Anmelder: Redtenbacher Präzisionsteile Ges. M.B.H., 4644 Scharnstein (AT)
(72) Erfinder: Buchegger, Harald, 4817 St. Konrad (AT); Sprickler, Martin, 4801 Traunkirchen (AT)
(74) Vertreter: Hübscher, Helmut

(57) **Zusammenfassung**

Es wird ein Federscharnier für eine Brille mit zwei durch eine Scharnierachse (3) miteinander verbundenen Scharnierteilen (1, 2), von denen einer eine Lagergabel (4) für den anderen Scharnierteil (2) formt, der mit Hilfe eines Gleitstücks (6) in einem Gehäuse (7) verschiebbar geführt ist, und mit einer Schraubenfeder (14) beschrieben, die sich einerseits an einem Steg (8) des Gleitstücks (6) und anderseits an einem gehäusefesten Widerlager (13) abstützt, das durch eine Durchtrittsöffnung (16) im Scharnierteil (2) mit dem Gleitstück (6) koaxial zur Schraubenfeder (14) in das Gehäuses (7) eingesetzt ist. Um eine kurze Baulänge zu erreichen wird vorgeschlagen, dass das Widerlager (13) eine das scharnierseitige Ende der Schraubenfeder (14) aufnehmende Hülse (15) umfasst, die über das Gehäuse (7) in den Bereich der Scharnierachse (3) vorsteht.

## Beschreibung

Die Erfindung bezieht sich auf ein Federscharnier für eine Brille mit zwei durch eine Scharnierachse miteinander verbundenen Scharnierteilen, von denen einer eine Lagergabel für den anderen Scharnierteil formt, der mit Hilfe eines Gleitstücks in einem Gehäuse verschiebbar geführt ist, und mit einer Schraubenfeder, die sich einerseits an einem Steg des Gleitstücks und anderseits an einem gehäusefesten Widerlager abstützt, das durch eine Durchtrittsöffnung im Scharnierteil mit dem Gleitstück koaxial zur Schraubenfeder in das Gehäuses eingesetzt ist.

Zur Sicherstellung einfacher Montagebedingungen ist es bei Federscharnieren bekannt (AT 502 196 B1), den bügelseitigen Scharnierteil mit einem in eine Gehäuseausnehmung eingreifenden Gleitstück zu versehen, das zwischen zwei Schenkeln eine Schraubenfeder aufnimmt, die sich einerseits an einem die beiden Schenkel verbindenden Steg und anderseits an einem Widerlager abstützt, das in ein zur Schraubenfeder koaxiales Muttergewinde des Gehäuses eingeschraubt wird, und zwar durch eine koaxiale Durchtrittsöffnung des bügelseitigen Scharnierteils. Eine solche Konstruktion stellt eine vorteilhafte Voraussetzung für ein in Umfangsrichtung geschlossenes Gehäuse dar, das ohne Schwierigkeiten von der Stirnseite her in einen Brillenbügel eingesetzt werden kann. Allerdings ergibt sich wie auch bei anderen Federscharnieren eine vergleichsweise große Baulänge, weil die eine bestimmte Mindestlänge aufweisende Schraubenfeder zusammen mit dem scharnierseitigen Widerlager im Gehäuse untergebracht werden muss.

Der Erfindung liegt somit die Aufgabe zugrunde, ein Federscharnier so auszugestalten, dass seine Baulänge erheblich verkürzt werden kann, ohne auf einen ausreichenden Federweg der das Gleitstück beaufschlagenden Schraubenfeder verzichten zu müssen.

Ausgehend von einem Federscharnier der eingangs geschilderten Art löst die Erfindung die gestellt Aufgabe dadurch, dass das Widerlager eine das scharnierseitige Ende der Schraubenfeder aufnehmende Hülse umfasst, die über das Gehäuse in den Bereich der Scharnierachse vorsteht.

Durch das hülsenartige, über das Gehäuse in Richtung der Scharnierachse vorstehende Widerlager wird zusätzlicher Raum für die Unterbringung der das Gleitstück beaufschlagenden Schraubenfeder außerhalb des Gehäuses geschaffen, sodass das Gehäuse, das nunmehr nur einen Teil der Schraubenfeder aufzunehmen hat, entsprechend kürzer ausfallen kann. Voraussetzung hiefür ist, dass die Scharnierachse dieser Verlagerung des Widerlagers nicht im Wege steht. Aus diesem Grunde wird die Scharnierachse im Bereich des vorstehenden Widerlagers unterbrochen, sodass sich vorzugsweise zwei seitliche Achsstummel ergeben, zwischen denen Platz für die Hülse des Widerlagers bleibt. Es wäre aber auch denkbar, nur einen seitlichen Achsstummel als Scharnierachse vorzusehen. Da zufolge der vorgeschlagenen Maßnahmen lediglich die scharnierseitige Abstützung der Schraubenfeder vor das Gehäuse verlagert wird, bleibt die Funktion des Federscharniers insbesondere hinsichtlich des möglichen Verschiebewegs für den Scharnierteil mit dem Gleitstück durch die vorgeschlagenen Maßnahmen unberührt.

Um den Scharnierteil mit dem Gleitstück in einfacher Art in die Lagergabel des anderen Scharnierteils einsetzten zu können, können die beiden die Scharnierachse bildenden Achsstummel im Scharnierteil mit dem Gleitstück axial verschiebbar gelagert werden und gegen Federkraft gegeneinander in eine eingeschobene Montagestellung verlagerbar sein, sodass zur Montage lediglich die beiden über den mittleren Scharnierlappen vorstehenden Achsstummel in den Scharnierlappen eingeschoben werden müssen, um die Lagergabel über die eingeschobenen Achsstummel auf den mittleren Scharnierlappen aufschieben zu können. Sobald die Achsstummel die Lagerausnehmungen in der Lagergabel erreichen, werden sie über ihre Federbelastung in die Lagerausnehmungen gedrückt, womit der Montagevorgang beendet ist. Zu allfälligen Demontage sind die Achsstummel durch entsprechende Öffnungen in den Schenkeln der Lagergabel entgegen der Federkraft wieder in die Montagestellung zu verschieben.

Die gehäusefeste Abstützung des Widerlagers kann konstruktiv auf unterschiedliche Art gelöst werden, kommt es ja bloß auf die verschiebefeste Abstützung des Widerlagers gegenüber dem Gehäuse an. Besonders einfache Konstruktionsbedingungen können allerdings dann erhalten werden, wenn die Hülse des Widerlagers in ein zur Schraubenfeder koaxiales Muttergewinde des Gehäuses eingeschraubt wird, weil in diesem Fall eine sichere, wieder lösbare Verankerung der Hülse im Gehäuse sichergestellt werden kann, ohne auf den Verschiebeweg der Schraubenfeder Rücksicht nehmen zu müssen. Außerdem kann durch eine Schraubverstellung des hülsenartigen Widerlagers im Bedarfsfall die Vorspannung der Schraubenfeder eingestellt werden.

In der Zeichnung ist der Erfindungsgegenstand beispielsweise dargestellt. Es zeigen
- Fig. 1: ein erfindungsgemäßes Federscharnier für eine Brille in einem vereinfachten Längsschnitt,
- Fig. 2: dieses Federscharnier in einem Schnitt nach der Linie II-II der Fig. 1,
- Fig. 3: einen Schnitt nach der Linie III-III der Fig. 2 und
- Fig. 4: eine der Fig. 2 entsprechende Darstellung einer Konstruktionsvariante eines erfindungsgemäßen Federscharniers.

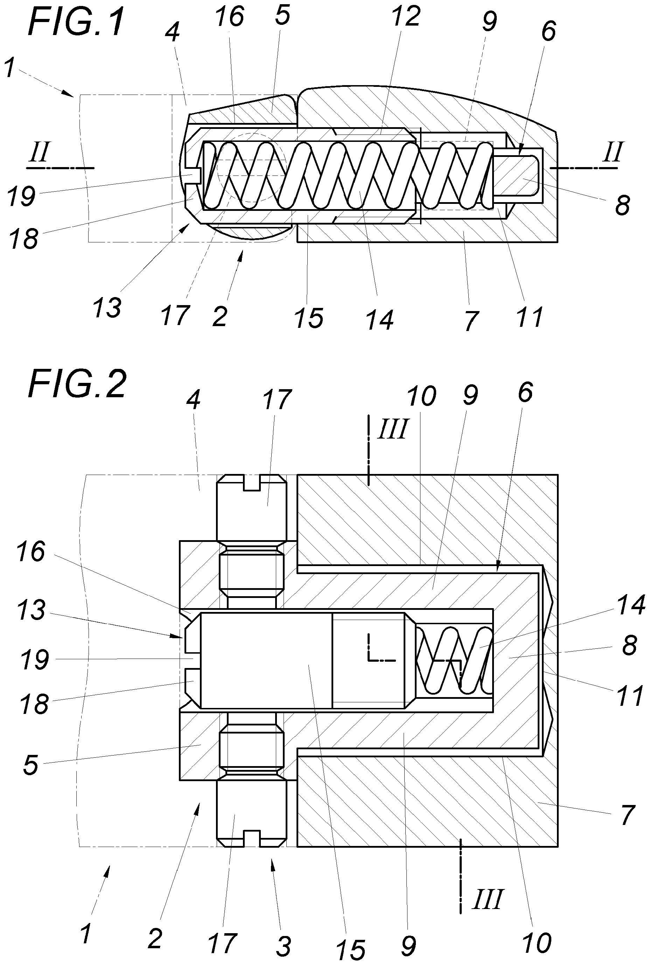

Das Federscharnier gemäß den Fig. 1 bis 3 weist zwei einem Bügel und einem Bügelbacken einer Brille zugehörige Scharnierteile 1 und 2 auf, die mit Hilfe einer Scharnierachse 3 gelenkig miteinander verbunden sind. Der Scharnierteil 1 bildet dabei eine Lagergabel 4, in die der einen mittleren Scharnierlappen 5 ergebende Scharnierteil 2 eingreift. Dieser Scharnierteil 2 trägt ein Gleitstück 6, das in einem Gehäuse 7 verschiebbar geführt ist und zwei parallele, durch einen Steg 8 miteinander verbundene Schenkel 9 aufweist. Die Gehäuseausnehmung zur verschiebbaren Führung des Gleitstückes 6 setzt sich aus zwei seitlichen Führungsabschnitten 10 für die beiden Schenkel 9 und einer die beiden Führungsabschnitte 10 verbindenden Öffnung 11 für den Steg 8 zusammen. Aus Gründen der einfachen Herstellung werden sowohl die Führungsabschnitte 10 als auch die Verbindungsöffnung 11 durch einander im Querschnitt überschneidende Bohrungen gebildet, die allerdings im Bereich der Führungsabschnitte 10 Führungsaussparungen zur drehsicheren Aufnahme der im Querschnitt rechteckigen Schenkel 9 aufweisen.

Die Bohrung für die Verbindungsöffnung 11 ist mit einem Muttergewinde 12 versehen, in das ein Widerlager 13 für eine Schraubenfeder 14 eingeschraubt wird, die zwischen den Schenkeln 9 des Gleitstückes 6 zu liegen kommt und sich mit ihrem dem Widerlager 13 gegenüberliegenden Ende am Steg 8 des Gleitstückes 6 abstützt. Das Widerlager 13 ist in Form einer das scharnierseitige Ende der Schraubenfeder 14 aufnehmenden Hülse 15 ausgebildet, die durch eine zur Schraubenfeder 14 koaxiale Durchtrittsöffnung 16 im Scharnierlappen 5 des Scharnierteils 2 über das Gehäuse 7 vorsteht, und zwar bis in den Bereich der Scharnierachse 3, die zu diesem Zweck im Bereich der Durchtrittsöffnung 16 unterbrochen ist und zwei seitliche Achsstummel 17 bildet.

Da der Boden 18 der endseitig geschlossenen Hülse 15 dem Gehäuse 7 scharnierseitig in einem entsprechenden Abstand vorgelagert ist, befindet sich die durch den Boden 18 der Hülse 15 bestimmte gehäusefeste Abstützung der Schraubenfeder 14 außerhalb des Gehäuses 7, sodass das Gehäuse 7 in Verschieberichtung des Gleitstücks 6 um den Überstand der Hülse 15 kürzer ausgebildet werden kann, ohne Einfluss auf die Schraubenfederlänge oder den Federweg der Schraubenfeder 14 nehmen zu müssen. Das Gleitstück 6 und damit der Scharnierteil 2 können somit in gleicher Weise entgegen der Kraft der Schraubenfeder 14 aus dem Gehäuse 7 ausgezogen werden, wie dies bei herkömmlichen Federscharnieren mit vollständig im Gehäuse untergebrachten Schraubenfedern der Fall ist.

Um das Einschrauben der das Widerlager 13 bildenden Hülse 15 in das Muttergewinde 12 des Gehäuses 7 zu erleichtern, kann der Boden 18 der Hülse 15 mit einer Aussparung 19 zum Ansetzen eines Betätigungswerkzeuges versehen sein. Über die Einschraubtiefe der Hülse 15 kann außerdem die Vorspannung der Schraubenfeder 14 im Bedarfsfall eingestellt oder verändert werden. Da die Hülse 15 eine vergleichsweise große Länge aufweist, ergeben sich bei einer entsprechenden Gewindelänge vorteilhafte Konstruktionsvoraussetzungen für eine solche Schraubverstellung der Hülse 15 zur Einstellung der Vorspannung der Schraubenfeder 14.

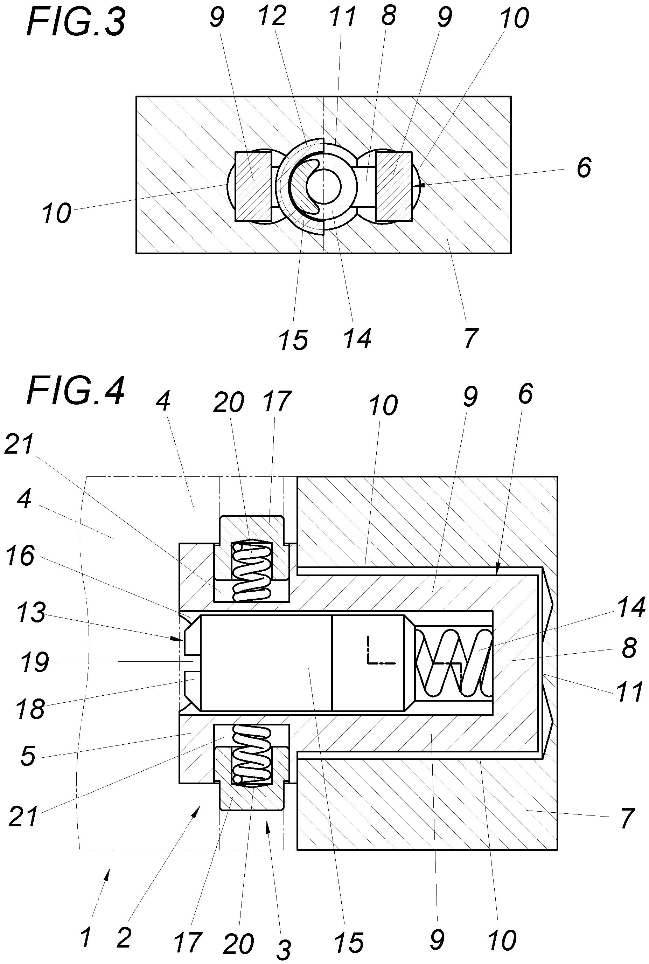

Das Ausführungsbeispiel nach der Fig. 4 unterscheidet sich von dem Federscharnier nach den Fig. 1 bis 3 lediglich durch die Ausführung der Scharnierachse 3, weil die beiden Achsstummel 17 im mittleren Scharnierlappen 5 axial verschiebbar gelagert sind und durch Schraubenfedern 20 beaufschlagt werden, sodass sie entgegen der Kraft der Schraubenfedern 20 um ihre Überstandslänge in die Führungsausnehmungen 21 eingeschoben werden können. In dieser Montagestellung kann der mittlere Scharnierlappen 5 des einen Scharnierteils 2 in die Lagergabel 4 des anderen Scharnierteils 1 eingeführt werden, bis die federbeaufschlagten Achsstummel 17 die Lagerausnehmungen in der Lagergabel 4 erreichen und in diese ausgeschoben werden, womit die Montage abgeschlossen ist.

Die Erfindung ist selbstverständlich nicht auf die dargestellten Ausführungsbeispiele beschränkt. So ist beispielsweise die Anordnung der Schraubenfeder 14 zwischen zwei Schenkeln 9 des Gleitstücks 6 nicht zwingend, weil es nur darauf ankommt, die Schraubenfeder 14 an ihrem von der Scharnierachse 3 abgekehrten Ende am Gleitstück 6 abzustützen, was lediglich eines entsprechenden Stützsteges des Gleitstückes 6 bedarf.

## Patentansprüche

1. Federscharnier für eine Brille mit zwei durch eine Scharnierachse (3) miteinander verbundenen Scharnierteilen (1, 2), von denen einer eine Lagergabel (4) für den anderen Scharnierteil (2) formt, der mit Hilfe eines Gleitstücks (6) in einem Gehäuse (7) verschiebbar geführt ist, und mit einer Schraubenfeder (14), die sich einerseits an einem Steg (8) des Gleitstücks (6) und anderseits an einem gehäusefesten Widerlager (13) abstützt, das durch eine Durchtrittsöffnung (16) im Scharnierteil (2) mit dem Gleitstück (6) koaxial zur Schraubenfeder (14) in das Gehäuses (7) eingesetzt ist, **dadurch gekennzeichnet, dass** das Widerlager (13) eine das scharnierseitige Ende der Schraubenfeder (14) aufnehmende Hülse (15) umfasst, die über das Gehäuse (7) in den Bereich der Scharnierachse (3) vorsteht.

2. Federscharnier nach Anspruch 1 **dadurch gekennzeichnet, dass** die Hülse (15) des Widerlagers (13) in den Bereich zwischen zwei die Scharnierachse (3) bildende Achsstummel (17) vorsteht.

3. Federscharnier nach Anspruch 2, **dadurch gekennzeichnet, dass** die beiden die Scharnierachse (3) bildenden Achsstummel (17) im Scharnierteil (2) mit dem Gleitstück (6) axial verschiebbar gelagert und gegen Federkraft gegeneinander in eine eingeschobene Montagestellung verlagerbar sind.

4. Federscharnier nach einem der Ansprüche 1 bis 3, **dadurch gekennzeichnet, dass** die Hülse (15) des Widerlagers (13) in ein zur Schraubenfeder (14) koaxiales Muttergewinde (12) des Gehäuses (7) einschraubbar ist.
